# EUROPEAN PATENT APPLICATION

(11) **EP 4 169 733 A1**
(43) Date of publication of application: **26.04.2023**
(21) Application number: 21825289.8
(22) Date of filing: 04.06.2021
(51) Int. Cl.: B60C 1/00, C08K 5/21, C08K 5/31, C08K 5/42, C08K 5/548, C08L 7/00, C08K 3/013

(54) **SILANE COUPLING AGENT COMPOSITION, AND RUBBER COMPOSITION COMPRISING SAME**

(30) Priority: 18.06.2020 JP 2020105628
(71) Applicant: ENEOS Corporation, Chiyoda-ku Tokyo 100-8162 (JP)
(72) Inventor: ASHIURA, Makoto, Tokyo 100-8162 (JP); CHINO, Keisuke, Tokyo 100-8162 (JP)
(74) Representative: Müller-Boré & Partner Patentanwälte PartG mbB
(86) International application number: PCT/JP2021/021319
(87) International publication number: WO 2021/256296

(57) **Abstract**

Provided is a silane coupling agent composition with which it is possible to obtain a rubber composition having excellent workability and a crosslinked product of a rubber composition having an excellent hardness, viscoelastic properties, and tensile strength. The silane coupling agent composition of the invention includes a silane compound represented by the following Formula (1), a protein denaturant, and/or a silanization reaction accelerator:

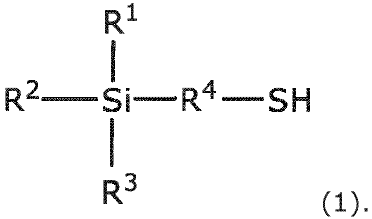

## Description

### BACKGROUND OF THE INVENTION

### Technical Field

The present invention relates to a silane coupling agent composition and a rubber composition comprising the same. The present invention also relates to a crosslinked product of the rubber composition and a tire using the rubber composition.

### Background Art

Conventionally, a silane compound having a reactive functional group and a hydrolyzable group has been used as a component of a silane coupling agent in order to improve the dispersibility of an organic polymer material such as rubber and an inorganic material such as silica in a rubber composition.

Usually, such a silane compound has a substituent such as a mercapto group, a polysulfide group, an amino group, or an epoxy group as a reactive functional group having high reactivity with an organic polymer material such as rubber and a substituent such as an alkoxysilyl group as a hydrolyzable group having high reactivity with an inorganic material such as silica. For example, Patent Literature 1 discloses a rubber composition containing a polysulfide-based silane coupling agent. In addition, Patent Literature 2 suggests a silane compound having an amino group as a reactive functional group and a methoxy group as a hydrolyzable group.

To solve the problem that impurities contained in natural rubber inhibit the reaction of a silane coupling agent, Patent Literature 3 discloses a rubber composition in which silica having a particular specific surface area and a specific glycerin monofatty acid ester are compounded in specific amounts. Patent Literature 4 discloses a tire rubber composition for which a modified natural rubber obtained by enzymatic treatment with a proteolytic enzyme followed by further enzymatic treatment with a lipolytic enzyme and/or a phospholipid-degrading is used. Further, Patent Literature 5 discloses a method for producing deproteinized natural rubber latex characterized by adding a protein denaturant selected from the group consisting of urea-based compounds and NaClO to natural rubber latex and removing the protein denaturant after denaturing the proteins in the latex. Furthermore, Patent Literature 6 discloses a method for producing modified natural rubber in which by adding a urea-based compound, proteins are released from rubber particles in natural rubber latex and dried such that the proteins are contained in the modified natural rubber.

### Citation List

### Patent Literature

Patent Literature 1: Japanese Unexamined Patent Publication H8-259736 (1996)
Patent Literature 2: Japanese Unexamined Patent Publication H11-335381 (1996)
Patent Literature 3: Japanese Unexamined Patent Publication No. 2016-113515
Patent Literature 4: Japanese Unexamined Patent Publication No. 2016-74844
Patent Literature 5: Japanese Unexamined Patent Publication No. 2004-99696
Patent Literature 6: Japanese Unexamined Patent Publication No. 2010-111722

### SUMMARY OF THE INVENTION

### Technical Problem

However, the reactive functional group of the silane compound suggested in Patent Literature 1 and 2 has a high polarity, and therefore in a case in which an organic polymer material to be mixed has a low polarity, there was a tendency that affinity between the silane compound and the organic polymer material is low, causing poor dispersion and poor mixing to occur. For such a reason, in a case in which a silane coupling agent composition comprising such a silane compound was contained in a rubber composition, there was a tendency that hardness, tensile properties, and viscoelastic properties of the molded product of a rubber composition obtained by molding this rubber composition cannot be sufficiently improved. Meanwhile, in a case in which a conventional silane compound having a low-polar reactive functional group was added in order to increase affinity with a low-polarity organic polymer material, its reactivity with an organic polymer material was low, and its performance as a silane coupling agent was insufficient.

The rubber composition in which silica having a particular specific surface area and a specific glycerin monofatty acid ester are compounded in specific amounts described in Patent Literature 3 had room for further improvement in tensile properties such as modulus. In addition, there was a concern that the tire rubber composition for which a modified natural rubber obtained by enzymatic treatment with a proteolytic enzyme followed by enzymatic treatment with a lipolytic enzyme and/or a phospholipid-degrading is used described in Patent Literature 4 would complicate the process and cause an increase in cost.

Further, although a protein denaturant is used in Patent Literature 5, it is a technology related to the production of liquid natural rubber latex. Patent Literature 5 does not describe natural rubber in the form of dry rubber. In addition, no specific silane coupling agent is described. Patent Literature 6 relates to the production of solid natural rubber using special equipment after adding a protein denaturant to natural rubber latex but does not describe a specific silane coupling agent.

The present inventors found a problem that impurities in natural rubber (e.g., proteins and phospholipids) inhibit the coupling reaction, which causes poor mixing and poor dispersion of organic polymer materials, including natural rubber and inorganic materials such as silica. As a result of intensive studies in order to obtain means for solving such a problem, the present inventors found that when a silane coupling agent composition comprising a silane compound having a specific structure and functioning by itself as a coupling agent and a protein denaturant is compounded into a rubber composition containing diene-based rubber (especially natural rubber or synthetic isoprene rubber) or the like, a coupling reaction is promoted, and as a result, the dispersibility of an inorganic material such as silica is improved, and thus, the viscoelastic properties of a rubber product or the like obtained from the rubber composition or the like are improved. The present inventors also found that when the above-described silane compound and a silane coupling agent composition comprising a silanization reaction accelerator are compounded into a rubber composition containing a diene-based rubber (especially natural rubber or synthetic isoprene rubber) or the like, a coupling reaction is promoted, and as a result, the dispersibility of an inorganic material such as silica is improved, and thus, the viscoelastic properties of a rubber product or the like obtained from the rubber composition or the like are improved. The present invention is based on these findings.

Therefore, it is an object of the present invention to provide a silane coupling agent composition with which it is possible to obtain a crosslinked product of a rubber composition having excellent hardness, viscoelastic properties, and tensile strength, which has appropriate reactivity with an organic polymer material such as rubber. It is another object of the present invention to provide a crosslinked product of a rubber composition having excellent hardness, viscoelastic properties, and tensile strength, and a tire using the same which has excellent steering stability and an excellent balance of wet grip performance and low-fuel consumption.

### Solution to Problem

As a result of intensive studies, the present inventors found that by using, as silane coupling agents, two alicyclic silane compounds having affinity and moderate reactivity with organic polymer materials, having an alicyclic hydrocarbon moiety with an olefinic structure, and having a silyl group, a coupling reaction is promoted, and as a result, in a case in which a material to be compounded is a rubber composition, the dispersibility of an inorganic material such as silica is improved, and thus, the hardness, viscoelastic properties, and tensile strength of a crosslinked product (rubber product) or the like obtained from the rubber composition or the like are improved. The present invention is based on these findings.

The present invention encompasses the following inventions.
[1] A silane coupling agent composition comprising a silane compound, a protein denaturant, and/or a silanization reaction accelerator, wherein the silane compound is represented by the following Formula (1): 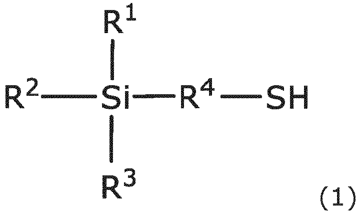 wherein
   at least one or all of R¹, R², and R³ are -O-(R⁵-O)ₘ-R⁶ (R⁵ is a divalent hydrocarbon group having 1 to 30 carbon atoms, R⁶ is an alkyl group having 1 to 30 carbon atoms, an alkenyl group having 2 to 30 carbon atoms, an aryl group having 6 to 30 carbon atoms, or an aralkyl group having 7 to 30 carbon atoms, m is an integer of 1 to 30, and when there are a plurality of R⁵s, the plurality of R⁵s may be the same or different);
   when one or two of R¹, R², and R³ are -O-(R⁵-O)ₘ-R⁶ above, the remaining groups can be an alkyl group having 1 to 12 carbon atoms, -O-R⁷ (R⁷ is a hydrogen atom, an alkyl group having 1 to 30 carbon atoms, an alkenyl group having 2 to 30 carbon atoms, an aryl group having 6 to 30 carbon atoms, or an aralkyl group having 7 to 30 carbon atoms), a hydrogen atom, or an aryl group having 6 to 30 carbon atoms;
   R¹, R², and R³ may be the same or different; and
   R⁴ is a divalent hydrocarbon group having 1 to 30 carbon atoms.
[2] The silane coupling agent composition according to [1], wherein the protein denaturant is at least one selected from the group consisting of a carbamide compound, a guanidine compound, and a surfactant.
[3] The silane coupling agent composition according to [1], wherein the silanization reaction accelerator is at least one selected from the group consisting of a carbamide compound and a guanidine compound.
[4] The silane coupling agent composition according to [2] or [3], wherein the carbamide compound is urea.
[5] The silane coupling agent composition according to [2] or [3], wherein the guanidine compound is at least one selected from the group consisting of guanidine hydrochloride and diphenylguanidine.
[6] The silane coupling agent composition according to [2], wherein the surfactant is sodium dodecyl sulfate.
[7] The silane coupling agent composition according to any one of [1] to [6], which further comprises a different silane compound other than the compound represented by Formula (1) above.
[8] The silane coupling agent composition according to [7], wherein the different silane compound is a silane compound represented by the following Formula (2): 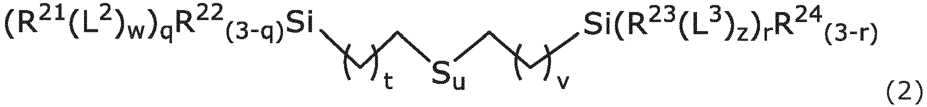 wherein
   t and v are each independently an integer of 0 to 10;
   u is an integer of 2 to 10;
   q and r are each independently an integer of 1 to 3;
   w and z are each independently an integer of 0 or 1,
   L² and L³ are each independently a hydrocarbon group optionally containing at least one heteroatom selected from the group consisting of nitrogen, oxygen, and sulfur;
   R²¹ and R²³ are each independently an alkoxy group or an amino group substituted with one or more alkyl groups; and
   R²² and R²⁴ are each independently hydrogen or an alkyl group.
[9] The silane coupling agent composition according to any one of [1] to [8], which is used for at least one elastomer having a glass transition point of 25°C or less selected from the group consisting of natural rubber, deproteinized natural rubber, and synthetic isoprene rubber.
[10] A rubber composition comprising the silane coupling agent composition according to any one of [1] to [9], at least one elastomer having a glass transition point of 25°C or less selected from the group consisting of natural rubber, deproteinized natural rubber, and synthetic isoprene rubber, and an inorganic material.
[11] The rubber composition according to [10], wherein a content of the silane compound represented by Formula (1) in the rubber composition is from 0.1 to 30 parts by mass with respect to 100 parts by mass of the elastomer.
[12] The rubber composition according to [10] or [11], wherein a content of the inorganic material is from 5 to 100 parts by mass with respect to 100 parts by mass of the elastomer.
[13] The rubber composition according to any one of [10] to [12], which is used for a tire.
[14] A crosslinked product of the rubber composition according to any one of [10] to [13].
[15] A tire comprising the crosslinked product according to [14].

### Advantageous Effects of Invention

According to the present invention, a silane coupling agent composition with which it is possible to obtain a crosslinked product of a rubber composition having excellent hardness, viscoelastic properties, and tensile strength, which has appropriate reactivity with an organic polymer material such as rubber can be provided. It is also possible to improve the workability of the rubber composition containing a natural rubber. Further, according to the present invention, a crosslinked product of a rubber composition having excellent hardness, viscoelastic properties, and tensile strength, and a tire using the same which has excellent steering stability and an excellent balance of wet grip performance and low-fuel consumption can be provided.

### DETAILED DESCRIPTION OF THE INVENTION

### [Definition]

The terms "part(s)," "%," and the like indicating compounding amounts used herein are based on mass unless otherwise specified.

### [Silane Coupling Agent Composition]

The silane coupling agent composition of the present invention is characterized by comprising a silane compound described below and a protein denaturant and/or a silanization reaction accelerator. By adding the silane coupling agent composition of the present invention to at least one elastomer having a glass transition point of 25°C or less selected from the group consisting of natural rubber and deproteinized natural rubber, it is possible to obtain a rubber composition having a low viscosity and excellent workability while having appropriate reactivity and a crosslinked product of a rubber composition having excellent hardness, viscoelastic properties, and tensile strength.

The silane coupling agent composition may further comprise carbon black. As the carbon black, carbon black described in inorganic materials described below can be used. Each component of the silane coupling agent composition will be described in detail below.

### (Silane Compound)

The silane compound contained in the silane coupling agent composition of the present invention is represented by the following Formula (1): 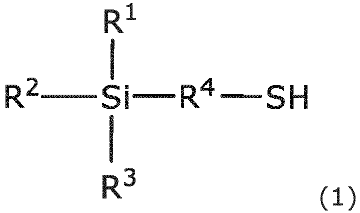 wherein
at least one or all of R¹, R², and R³ are -O-(R⁵-O)ₘ-R⁶ (R⁵ is a divalent hydrocarbon group having 1 to 30 carbon atoms, R⁶ is an alkyl group having 1 to 30 carbon atoms, an alkenyl group having 2 to 30 carbon atoms, an aryl group having 6 to 30 carbon atoms, or an aralkyl group having 7 to 30 carbon atoms, m is an integer of 1 to 30, and when there are a plurality of R⁵s, the plurality of R⁵s may be the same or different);
when one or two of R¹, R², and R³ are -O-(R⁵-O)ₘ-R⁶ above, the remaining groups can be an alkyl group having 1 to 12 carbon atoms, -O-R⁷ (R⁷ is a hydrogen atom, an alkyl group having 1 to 30 carbon atoms, an alkenyl group having 2 to 30 carbon atoms, an aryl group having 6 to 30 carbon atoms, or an aralkyl group having 7 to 30 carbon atoms), a hydrogen atom, or an aryl group having 6 to 30 carbon atoms;
R¹, R², and R³ may be the same or different; and
R⁴ is a divalent hydrocarbon group having 1 to 30 carbon atoms.

In Formula (1) above, examples of a divalent hydrocarbon group having 1 to 30 carbon atoms represented by R⁴ or R⁵ include: an aliphatic hydrocarbon group such as an alkylene group (e.g., methylene group, dimethylene group, or trimethylene group); an aromatic hydrocarbon group; and a combination thereof.

Examples of an alkyl group having 1 to 30 carbon atoms, an alkenyl group having 2 to 30 carbon atoms, an aryl group having 6 to 30 carbon atoms, or an aralkyl group having 7 to 30 carbon atoms represented by R⁶ or R⁷ include alkyl groups such as a methyl group and an ethyl group; alkenyl groups such as a vinyl group and an allyl group; aryl groups such as a phenyl group and a tolyl group; and aralkyl group such as a benzyl group and a phenethyl group.
m is preferably an integer of 1-20, more preferably an integer of 2-15, and still more preferably from 3 to 10.

When one or two of R¹, R², and R³ are -O-(R⁵-O)ₘ-R⁶ above, examples of an alkyl group having 1 to 12 carbon atoms or an aryl group having 6 to 30 carbon atoms as the remaining group include: alkyl groups such as a methyl group and an ethyl group; and aryl groups such as a phenyl group and a tolyl group.

In one preferred embodiment of Formula (1) above, two of R¹, R², and R³ are -O-(C₂H₄-O)ₙ-C₁₃H₂₇, the remaining group is -O-C₂H₅, the average number of n is 5, and R4 is a trimethylene group. Examples of such a compound represented by Formula (1) include "Si363" (trade name; manufactured by Degussa AG).

The total content of a silane compound represented by Formula (1) above in the silane coupling agent composition is preferably from 50% to 99% by mass, more preferably from 55% to 95% by mass, and still more preferably from 60% to 90% by mass with respect to the total mass of the silane coupling agent composition. As long as the content of a silane compound represented by Formula (1) above in the silane coupling agent composition is within the above-described numerical range, a rubber composition having excellent workability while having appropriate reactivity with an organic polymer material such as rubber and a crosslinked product of a rubber composition having excellent hardness, viscoelastic properties, and tensile strength can be easily obtained.

### (Different Silane Compound)

The silane coupling agent composition of the present invention may further comprise a different silane compound other than the silane compound represented by Formula (1) above (also herein referred to as "different silane compound" in some cases). When a rubber composition comprising the silane coupling agent composition of the present invention is vulcanized by reaction, the different silane compound is also incorporated into the vulcanization reaction, and thus, the silane compound represented by Formula (1) above, which functions as a silane coupling agent, reacts with the different silane compound. It is considered that this reaction creates a synergistic effect that increases the coupling efficiency. The different silane compound in the rubber composition of the present invention is preferably a sulfur-containing silane compound other than the silane compound represented by Formula (1) above.

As the different silane compound, for example, a compound represented by the following Formula (2) can be used: 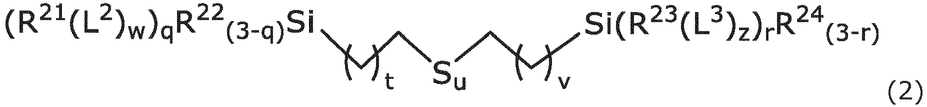 wherein
t and v are each independently an integer of 0 to 10;
u is an integer of 2 to 10;
q and r are each independently an integer of 1 to 3;
w and z are each independently an integer of 0 or 1,
L² and L³ are each independently a hydrocarbon group optionally containing at least one heteroatom selected from the group consisting of nitrogen, oxygen, and sulfur;
R²¹ and R²³ are each independently an alkoxy group or an amino group substituted with one or more alkyl groups; and
R²² and R²⁴ are each independently a hydrogen atom or an alkyl group.

In Formula (2) above, t and v are each independently an integer of 0 to 10, preferably an integer of 0 to 5, more preferably an integer of 1 to 3, and still more preferably 2;
u is an integer of 2 to 10, preferably an integer of 2 to 8;
q and r are each independently an integer of 1 to 3, preferably an integer of 2 to 3 and more preferably 3; and
w and z are each independently an integer of 0 or 1, preferably 0.
L² and L³ are each independently a hydrocarbon group optionally containing at least one heteroatom selected from the group consisting of nitrogen, oxygen, and sulfur; L is preferably a hydrocarbon group having 1 to 30 carbon atoms optionally containing at least one heteroatom selected from the group consisting of nitrogen, oxygen, and sulfur, more preferably a hydrocarbon group having 1 to 20 carbon atoms optionally containing at least one heteroatom selected from the group consisting of nitrogen, oxygen, and sulfur, and still more preferably a hydrocarbon group having 1 to 10 carbon atoms optionally containing at least one heteroatom selected from the group consisting of nitrogen, oxygen, and sulfur.
R²¹ and R²³ are each independently a hydrolyzable group, which is an alkoxy group, more preferably an alkoxy group having 1 to 30 carbon atoms, and still more preferably an alkoxy group having 1 to 20 carbon atoms, or an amino group substituted with one or more alkyl groups, more preferably an amino group substituted with one or more alkyl groups having 1 to 30 carbon atoms, and still more preferably amino group substituted with one or more alkyl groups having 1 to 20 carbon atoms. Specific examples of the alkoxy group include a methoxy group, an ethoxy group, a propoxy group, an isopropoxy group, a butoxy group, and an isobutoxy group, among which a methoxy group and an ethoxy group are preferable. Examples of the amino group substituted with one or more alkyl groups include an N-methylamino group, an N,N-dimethylamino group, an N-ethylamino group, an N,N-diethylamino group, and an N-isopropylamino group, among which an N-methylamino group or an N-ethyl amino group is preferable. An alkoxy group and an amino group may be bound to silicon (Si) via a linking group consisting of a hydrocarbon group optionally containing at least one heteroatom selected from the group consisting of nitrogen, oxygen, and sulfur.
R²² and R²⁴ is each independently a hydrogen atom or an alkyl group, more preferably an alkyl group having 1 to 30 carbon atoms, and still more preferably an alkyl group having 1 to 20 carbon atoms. Specific examples thereof include a methyl group, an ethyl group, a propyl group, an isopropyl group, a butyl group, an isobutyl group, a tert-butyl group, a pentyl group, a cyclopentyl group, a hexyl group, and a cyclohexyl group, among which a methyl group and an ethyl group are preferable.

In addition, a compound represented by the following Formula (3) may also be used as a different silane compound: 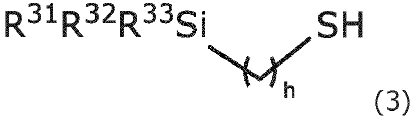 wherein
R³¹, R³², and R³³ each independently represent a hydrocarbon group optionally containing an oxygen atom or a nitrogen atom, or a hydrogen atom;
h is an integer of 1 to 10.
The compound can be produced by reaction.

R³¹, R³², and R³³ each independently represent a hydrocarbon group optionally containing an oxygen atom or a nitrogen atom or a hydrogen atom. Examples of the hydrocarbon group include an alkyl group, an aralkyl group, and an aryl group.

Examples of the alkyl group include a methyl group, an ethyl group, a propyl group, a butyl group, an isopropyl group, a tert-butyl group, a 2-ethylhexyl group, a cyclopentyl group, and a cyclohexyl group. The number of carbon atoms in the alkyl group is preferably from 1 to 60, more preferably from 1 to 30, and in particular, the alkyl group is preferably a methyl group or an ethyl group.

Examples of the aralkyl group include a benzyl group, a phenethyl group, a naphthylmethyl group, and a biphenylmethyl group. The number of carbon atoms in the aralkyl group is preferably from 7 to 60, more preferably from 7 to 20, and still more preferably from 7 to 14.

Examples of the aryl group include a phenyl group, a biphenyl group, a naphthyl group, a tolyl group, and a xylyl group. The number of carbon atoms in the aryl group is preferably from 6 to 60, more preferably from 6 to 24, and still more preferably from 6 to 12.

A hydrocarbon group containing an oxygen atom or a nitrogen atom is a group having a structure in which a carbon atom in the hydrocarbon group is replaced with an oxygen atom or a nitrogen atom.

In a further preferred embodiment of the present invention, the hydrocarbon group which may contain an oxygen atom or a nitrogen atom for R³¹, R³², and R³³ above is an alkoxy group, an amino group substituted with one or more alkyl groups, or an alkyl group. It is more preferably an alkoxy group having 1 to 30 carbon atoms, more preferably an alkoxy group having 1 to 20 carbon atoms, more preferably an amino group substituted with one or more alkyl groups having 1 to 30 carbon atoms, and still more preferably amino group substituted with one or more alkyl groups having 1 to 20 carbon atoms, or it is more preferably an alkyl group having 1 to 30 carbon atoms and still more preferably an alkyl group having 1 to 20 carbon atoms. Examples of the alkoxy group include a methoxy group, an ethoxy group, a propoxy group, an isopropoxy group, a butoxy group, and an isobutoxy group, among which a methoxy group and an ethoxy group are preferable. Examples of the amino group substituted with one or more alkyl groups include an N-methylamino group, an N,N-dimethylamino group, an N-ethylamino group, an N,N-diethylamino group, and an N-isopropylamino group, among which an N-methylamino group or an N-ethyl amino group is preferable. Examples of the alkyl group include a methyl group, an ethyl group, a propyl group, an isopropyl group, a butyl group, an isobutyl group, a tert-butyl group, a pentyl group, a cyclopentyl group, a hexyl group, and a cyclohexyl group, among which a methyl group and an ethyl group are preferable.

In particular, silane compounds having structures as shown below, can be used.

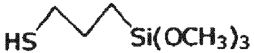

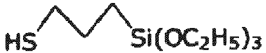

The content of the different silane compound in the silane coupling agent composition of the present invention is preferably from 0.1 to 0.9 and more preferably from 0.2 to 0.8 with respect to the total content of the silane compound represented by Formula (1) above and the different silane compound by mass ratio.

### (Protein Denaturant)

A protein denaturant known to those skilled in the art can be used as a protein denaturant in the silane coupling agent composition of the present invention. The protein denaturant may be any one that can reduce the stability of protein conformation in natural rubber. Typical examples of the protein denaturant include: carbamide compounds such as a urea derivative and thiourea; guanidine compounds such as guanidine hydrochloride, guanidinium thiocyanate, guanidine, and diphenylguanidine; surfactants such as sodium dodecyl sulfate; and glutaraldehyde, dimethyl suberimidate dihydrochloride, β-mercaptoethanol, and dithiothreitol. These protein denaturants may be used singly or in combination of two or more thereof. Of these, it is preferable to use a carbamide compound, a guanidine compound, and a surfactant, and it is more preferable to use a urea derivative, guanidine hydrochloride, diphenylguanidine, and sodium dodecyl sulfate. Examples of the urea derivative include urea, methylurea, ethylurea, propylurea, butylurea, pentylurea, hexylurea, cyclohexylurea, N,N'-dimethylurea, N,N'-diethylurea, N,N,N',N'-tetramethylurea, N,N-dimethyl-N',N'-diphenylurea, diethylurea, dipropylurea, dibutylurea, dipentylurea, dihexylurea, and salts thereof. Of these, urea is excellent. Further, it is preferable that the silane coupling agent composition of the present invention comprises both a carbamide compound and a guanidine compound.

### (Silanization Reaction Accelerator)

A silanization reaction accelerator can be used for the silane coupling agent composition of the present invention. The silanization reaction accelerator may be any one which promotes a silanization reaction between silica and the silane coupling agent. Examples of the silanization reaction accelerator include: carbamide compounds such as a urea derivative and thiourea; and guanidine compounds such as guanidine hydrochloride, guanidinium thiocyanate, guanidine, and diphenylguanidine. These silanization reaction accelerators may be used singly or in combination of two or more thereof. Examples of the urea derivative include urea, methylurea, ethylurea, propylurea, butylurea, pentylurea, hexylurea, cyclohexylurea, N,N'-dimethylurea, N,N'-diethylurea, N,N,N',N'-tetramethylurea, N,N-dimethyl-N',N'-diphenylurea, diethylurea, dipropylurea, dibutylurea, dipentylurea, dihexylurea, and salts thereof. Of these, urea is excellent.

There are two reaction processes in the first-stage reaction of the silanization reaction between silica and a silane coupling agent, which are a direct reaction between the alkoxy group of the silane coupling agent and the silanol group on the silica surface (dealcoholization condensation) and a dehydration condensation reaction between the hydrolyzed alkoxy group of the silane coupling agent and the silanol group on the silica surface. Subsequently, in the second-stage reaction of the silanization reaction, a condensation reaction between adjacent silane coupling agents chemically bound to the silica surface is induced. Here, hydrolysis of the silane coupling agent in the first-stage reaction is a reaction rate limiting factor. However, it is considered that in a case in which a silanization reaction accelerator such as a urea derivative exists, the rate of the hydrolysis reaction increases, thereby promoting the silanization reaction.

According to the present invention, a carbamide compound, a guanidine compound, and the like may exert the functions of both the protein denaturant and the silanization reaction accelerator. For example, in a case in which a silane coupling agent composition containing urea is added to a rubber composition, urea may exert both a protein denaturation effect on natural rubber or the like and an effect of promoting a silanization reaction between silica and a silane coupling agent. In this case, when the urea content is X% by mass with respect to the total mass of the silane coupling agent composition, the above-described "total content of a protein denaturant and a silanization reaction accelerator" is determined to be X% by mass with respect to the total mass of the silane coupling agent composition (i.e., the urea content is not calculated redundantly for both the protein denaturant and the silanization accelerator).

In addition, the total content of a protein denaturant and a silanization reaction accelerator in the silane coupling agent composition is preferably from 1% to 50% by mass, more preferably from 5% to 45% by mass, and still more preferably 10% to 40% by mass with respect to the total mass of the silane coupling agent composition. As long as the total content of the protein denaturant and the silanization reaction accelerator in the silane coupling agent composition is within the above-described numerical range, a rubber composition having excellent workability while having appropriate reactivity with an organic polymer material such as rubber and a crosslinked product of a rubber composition having excellent hardness, viscoelastic properties, and tensile strength can be easily obtained.

### [Rubber Composition]

The rubber composition of the present invention is characterized by comprising the silane coupling agent composition of the present invention, an elastomer, and an inorganic material. The rubber composition of the present invention is excellent in workability because the viscosity of the uncrosslinked compound can be lowered. Further, a crosslinked product having excellent hardness and viscoelastic properties can be obtained by using the rubber composition of the present invention. Such rubber composition can be preferably used for tires. Each component of the rubber composition will be described in detail below. The silane coupling agent composition is detailed above.

The contents of the silane compound represented by Formula (1) above is preferably from 0.1 to 30 parts by mass, more preferably from 0.5 to 20 parts by mass, and still more preferably from 1 to 15 parts by mass with respect to 100 parts by mass of an elastomer. When the content of the silane compound represented by Formula (1) above is within the above-described range, hardness, and viscoelastic properties of the crosslinked product in the rubber composition can be improved, thereby obtaining a tire having excellent steering stability and an excellent balance of wet grip performance and low-fuel consumption.

The content of the different silane compound in the rubber composition is preferably from 0.01 to 20 parts by mass and more preferably from 0.05 to 10 parts by mass with respect to 100 parts by mass of silica.

The content of a protein denaturant in the rubber composition can vary depending on the type of the protein denaturant, but may be any content as long as the stability of protein conformation decreases. The content of a protein denaturant in the rubber composition is preferably from 0.01 to 10 parts by mass, more preferably from 0.1 to 5 parts by mass, and still more preferably from 0.2 to 3.0 parts by mass with respect to 100 parts by mass of an elastomer. In a case in which two or more protein denaturants are contained, it is desired that the total content thereof is within this numerical range. When the content of a protein denaturant is within the numerical range, the workability of the rubber composition can be improved. For example, in a case in which a carbamide compound such as urea is used as a protein denaturant, it may be contained at preferably from 0.01 to 10 parts by mass, more preferably from 0.05 to 5 parts by mass, and still more preferably from 0.1 to 3 parts by mass with respect to 100 parts by mass of an elastomer. For example, in a case in which a guanidine compound such as Guanidine hydrochloride is used as a protein denaturant, it may be contained at preferably from 0.01 to 10 parts by mass, more preferably from 0.05 to 5 parts by mass, and still more preferably from 0.1 to 3 parts by mass with respect to 100 parts by mass of an elastomer. In addition, for example, in a case in which sodium dodecyl sulfate is used as a protein denaturant, it may be contained at preferably from 0.01 to 10 parts by mass, more preferably from 0.05 to 5 parts by mass, and still more preferably from 0.1 to 3 parts by mass with respect to 100 parts by mass of an elastomer.

The content of a silanization reaction accelerator in the rubber composition can vary depending on the type of the silanization reaction accelerator but may be any content as long as the silanization reaction is promoted. The content of a silanization reaction accelerator in the rubber composition is preferably from 0.01 to 10 parts by mass, more preferably from 0.1 to 5 parts by mass, and still more preferably from 0.2 to 3.0 parts by mass with respect to 100 parts by mass of an elastomer. In a case in which two or more silanization reaction accelerators are contained, it is desired that the total content thereof is within this numerical range. When the content of a silanization reaction accelerator is within the numerical range, the workability of the rubber composition can be improved. For example, in a case in which a carbamide compound such as urea is used as a silanization reaction accelerator, it may be contained at preferably from 0.01 to 10 parts by mass, more preferably from 0.05 to 5 parts by mass, and still more preferably from 0.1 to 3 parts by mass with respect to 100 parts by mass of an elastomer. For example, in a case in which a guanidine compound such as guanidine hydrochloride is used as a silanization reaction accelerator, it may be contained at preferably from 0.01 to 10 parts by mass, more preferably from 0.05 to 5 parts by mass, and still more preferably from 0.1 to 3 parts by mass with respect to 100 parts by mass of an elastomer.

### (Elastomer)

The elastomer in the rubber composition of the present invention is at least one elastomer having a glass transition point of 25°C or less selected from the group consisting of natural rubber, deproteinized natural rubber, and synthetic isoprene rubber (when it consists of two or more polymers, it is a mixture thereof). The deproteinized natural rubber used herein is natural rubber that has been deproteinized. Although the deproteinized natural rubber has a protein content fewer than that of usual natural rubber, it is not completely protein-free. Natural rubber or deproteinized natural rubber contains impurities derived from natural rubber (proteins, phospholipids, and the like). This hinders the coupling reaction of the silane coupling agent, causing a problem that the compounded inorganic material, such as silica, is not sufficiently dispersed in the elastomer. In order to solve this problem, the elastomer in the rubber composition of the present invention preferably contains natural rubber or deproteinized natural rubber as a whole or at least part thereof.

The glass transition temperature (Tg) of the elastomer in the rubber composition of the present invention is 25°C or less, preferably 0°C or less. When the glass transition temperature (Tg) of the elastomer is within this range, the rubber composition exhibits rubber-like elasticity at room temperature, which is preferable. According to the present invention, the glass transition temperature (Tg) is the glass transition point measured by differential scanning calorimetry (DSC). A heating rate of 10°C/min is preferable.

Examples of natural rubbers include natural rubber latex, technically specified rubber (TSR), ribbed smoked sheet (RSS), Gutta Percha, Eucommia-derived natural rubber, guayule-derived natural rubber, Russian dandelion-derived natural rubber, and plant-derived fermented rubber. Examples of natural rubbers also include modified natural rubbers obtained by modifying these natural rubbers such as epoxidized natural rubber, methacrylic acid-modified natural rubber, styrene-modified natural rubber, sulfonic acid-modified natural rubber, and zinc sulfonate-modified natural rubber. Examples of synthetic isoprene rubbers include copolymers of cis-1,4-isoprene, trans-1,4-isoprene, and 3,4-isoprene (so-called isoprene rubber (IR)). In addition, examples of those having a part of the structure of synthetic isoprene rubber include isoprene-butadiene rubber and halogenated isoprene rubber. According to the present invention, it is preferable to use isoprene rubber (IR) as a diene-based rubber, and it is more preferable to use synthetic isoprene rubber containing 75% or more of the cis-1,4-isoprene structure

As an elastomer that may optionally be contained other than natural rubber, deproteinized natural rubber, and synthetic isoprene rubber, a known natural polymer or synthetic polymer having a glass transition point of 25°C or less which may be liquid or solid can be exemplified. Specific examples thereof include at least one selected from the group consisting of butadiene rubber, nitrile rubber, silicone rubber, styrene-butadiene rubber, styrene-isoprene-butadiene rubber, ethylene-propylene-diene rubber, halogenated butyl rubber, halogenated isobutylene copolymer, chloroprene rubber, butyl rubber, and halogenated isobutylene-p-methylstyrene rubber. These can be used as any blend with natural rubber or deproteinized natural rubber.

It is preferable that the above-described an elastomer that may optionally be contained other than natural rubber, deproteinized natural rubber, and synthetic isoprene rubber is at least one selected from butadiene rubber, styrene-butadiene rubber, ethylene-propylene-diene rubber, halogenated butyl rubber, butyl rubber, and halogenated isobutylene-p-methylstyrene rubber among the above-described polymers.

The weight average molecular weight of the elastomer in the rubber composition of the present invention is preferably from 1,000 to 3,000,000 and more preferably from 10,000 to 1,000,000. According to the present invention, the weight average molecular weight is the weight average molecular weight (in terms of polystyrene) measured by gel permeation chromatography (GPC). Tetrahydrofuran (THF), N,N-dimethylformamide (DMF), and chloroform are preferably used as solvents for the measurement.

The content of the elastomer is preferably from 20% to 80% by mass, more preferably from 25% to 75% by mass, and still more preferably from 30% to 70% by mass with respect to the total solid mass of the rubber composition. As long as the content of the elastomer is within the above-described numerical range, a rubber composition that is excellent in steering stability and can improve wet grip properties and low-fuel consumption of a tire in a well-balanced manner can be obtained.

### (Inorganic Material)

Examples of an inorganic material contained in the rubber composition of the present invention include silica, carbon black, calcium carbonate, titanium oxide, clay, and talc, which can be used singly or in combination. Of these, it is preferable that at least silica is used in the present invention because mechanical properties and heat resistance can be further improved. The content of the inorganic material is preferably from 0.1 to 500 parts by mass and more preferably from 1 to 300 parts by mass with respect to 100 parts by mass of the elastomer.

Silica is not particularly limited, but for example, dry-process silica, wet-process silica, colloidal silica, and precipitated silica can be exemplified. Of these, wet-process silica containing hydrous silicic acid as the main component is preferable. These silicas may be used singly or in a combination of two or more thereof. The specific surface area of silica as described above is not particularly limited; however, improvements in reinforcing properties, wear resistance, exothermic properties, and the like are sufficiently achieved when the nitrogen adsorption-specific surface area (BET method) is in a range of usually from 10 to 400 m²/g, preferably from 20 to 300 m²/g and more preferably from 120 to 190 m²/g, which is preferable. The nitrogen adsorption-specific surface area used herein is a value determined by the BET method according to ASTM D3037-81. The amount of silica added is preferably from 1 to 300 parts by mass, more preferably from 5 to 200 parts by mass, and still more preferably from 10 to 150 parts by mass with respect to 100 parts by mass of the elastomer.

Carbon black is appropriately selected and used depending on the application. In general, carbon black is classified into hard carbon and soft carbon based on the particle size. Soft carbon has low reinforcing properties for rubber, and hard carbon has high reinforcing properties for rubber. In particular, it is preferable to use hard carbon has high reinforcing properties for the rubber composition of the present invention. The amount of carbon black added is preferably from 1 to 300 parts by mass, more preferably from 5 to 200 parts by mass, and still more preferably from 10 to 150 parts by mass with respect to 100 parts by mass of the elastomer. Carbon black may be added to the rubber composition or the silane coupling agent composition.

### (Other Processing Aids)

The rubber composition of the present invention may comprise other processing aids such as a vulcanizing agent such as sulfur, a vulcanization accelerator, a vulcanization acceleration aid, an anti-aging agent, a coloring agent, a softener, various oils, an antioxidant, a filler, and a plasticizer within the scope without departing from the spirit of the present invention.

Examples of the vulcanizing agent include: sulfur-based vulcanizing agents such as powdered sulfur, precipitated sulfur, highly dispersible sulfur, surface-treated sulfur, insoluble sulfur, dimorpholine disulfide, and alkylphenol disulfide; zinc oxide, magnesium oxide, litharge, p-quinonedioxam, p-dibenzoylquinonedioxime, tetrachloro-p-benzoquinone, poly-p-dinitrobenzene, methylenedianiline, phenol resin, brominated alkylphenol resin, and chlorinated alkylphenol resin. The content of the vulcanizing agent is preferably from 0.1 to 10 parts by mass and more preferably from 0.5 to 5 parts by mass with respect to 100 parts by mass of the elastomer.

Examples of the vulcanization accelerator include: thiuram-based vulcanization accelerators such as tetramethylthiuram disulfide (TMTD), tetraethylthiuram disulfide (TETD), and tetramethylthiuram monosulfide (TMTM); aldehyde ammonia-based vulcanization accelerators such as hexamethylenetetramine; guanidine-based vulcanization accelerators such as diphenylguanidine; thiazole-based vulcanization accelerators such as 2-mercaptobenzothiazole (MBT) and dibenzothiazyl disulfide (DM); sulfenamide-based vulcanization accelerators such as N-cyclohexyl-2-benzothiazylsulfenamide (CBS) and N-t-butyl-2-benzothiazylsulfenamide (BBS); and dithiocarbamate-based vulcanization accelerators such as zinc dimethyldithiocarbamate (ZnPDC). The content of the vulcanization accelerator is preferably from 0.01 to 10 parts by mass and more preferably from 0.1 to 5 parts by mass with respect to 100 parts by mass of the elastomer.

Examples of the vulcanization acceleration aid include: fatty acids such as acetyl acid, propionic acid, butanoic acid, stearic acid, acrylic acid, and maleic acid; fatty acid zincs such as zinc acetylate, zinc propionate, zinc butanoate, zinc stearate, zinc acrylate, and zinc maleate; and zinc oxides. The content of the vulcanization accelerator is preferably from 0.01 to 10 parts by mass and more preferably from 0.1 to 5 parts by mass with respect to 100 parts by mass of the elastomer.

Examples of an anti-aging agent include hindered phenol-based compounds and aliphatic and aromatic hindered amine-based compounds. The content of the anti-aging agent is preferably from 0.01 to 10 parts by mass and more preferably from 0.1 to 5 parts by mass with respect to 100 parts by mass of the elastomer.

Examples of the antioxidant include butyl hydroxytoluene (BHT) and butyl hydroxyanisole (BHA). The content of the antioxidant is preferably from 0.1 to 10 parts by mass and more preferably from 0.5 to 5 parts by mass with respect to 100 parts by mass of the elastomer.

Examples of the coloring agent include: inorganic pigments such as titanium dioxide, zinc oxide, ultramarine, red iron oxide, lithopone, lead, cadmium, iron, cobalt, aluminum, hydrochloride, and sulfate; azo pigments; and copper phthalocyanine pigments. The content of the coloring agent is preferably from 0.1 to 10 parts by mass and more preferably from 0.5 to 5 parts by mass with respect to 100 parts by mass of the elastomer.

According to the present invention, other processing aids can be used as a rubber composition obtained by kneading with a known rubber kneader such as a roll kneader, a Banbury (registered trademark) mixer, a kneader, or the like and carrying out vulcanization under arbitrary conditions. The amounts of the other processing aids to be added can also be a conventional usual amount to be added within the scope without departing from the spirit of the present invention.

### [Method for Producing Rubber Composition]

The method for producing the rubber composition of the present invention comprises a step of kneading the silane coupling agent, the elastomer, and the inorganic material described above. The method for producing the rubber composition of the present invention comprises preferably a step of kneading the silane coupling agent, the elastomer, the inorganic material, and the vulcanization acceleration aid described above.

The method for producing the rubber composition of the present invention further comprises preferably a step of kneading the vulcanizing agent. More preferably, the method may comprise a step of kneading the vulcanizing agent and the vulcanization accelerator described above.

In each step described above, the above-described other processing aids can be compounded with the rubber composition within the scope without departing from the spirit of the present invention.

In producing the rubber composition, a conventionally known kneader can be used, and the kneading temperature and time, order of compounding, and the like can be appropriately selected.

### [Crosslinked Product of Rubber Composition]

A crosslinked product of the rubber composition can be produced using the rubber composition of the present invention according to a conventionally known method and technical common knowledge widely known to those skilled in the art. For example, the crosslinked product can be produced by extruding the rubber composition, molding the extruded product using a molding machine, and then performing heating and pressurization using a vulcanizer so as to form crosslinks.

### [Tire]

The tire of the present invention comprises a crosslinked product of the rubber composition of the present invention. The tire of the present invention can be produced using the above-described rubber composition according to a conventionally known method and technical common knowledge widely known to those skilled in the art. For example, the tire can be produced by extruding the rubber composition, molding the extruded product using a tire molding machine, and then performing heating and pressurization using a vulcanizer so as to form crosslinks. By producing a tire using the rubber composition of the present invention, it is possible to improve steering stability, wet grip properties, and low-fuel consumption of the tire in a well-balanced manner.

The use of the tire is not particularly limited, but passenger car tires, heavy-duty tires, motorcycle tires, studless tires, and the like can be exemplified.

The shape, structure, size, and material of the tire are not particularly limited and can be appropriately selected according to the purpose. In addition, the rubber composition can be applied to each part of the tire. The part of the tire to which the composition is applied is not particularly limited. The tread, carcass, sidewall, inner liner, undertread, belt portion, and the like of the tire can be appropriately selected according to the purpose. According to the present invention, a pneumatic tire using the rubber composition for tire tread is preferable.

### EXAMPLES

The present invention will be described in more detail below with reference to Examples, but the present invention is not limited to these Examples.

### [Example 1]

### (Preparation of Silane Coupling Agent Composition, Rubber Composition, and Rubber Sheet)

First, the total amount of the silane compound represented by the following formula (trade name: Si363 manufactured by Degussa AG) and the total amount of the protein denaturant 1 (urea) were mixed, thereby obtaining a silane coupling agent composition:

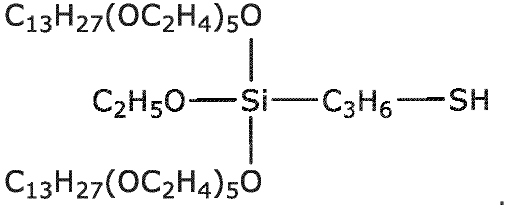

Subsequently, the following components were kneaded using a 100-mL kneader (Labo-plastomill manufactured by Toyo Seiki Co., Ltd.), thereby obtaining a rubber composition. Details of the kneading operation performed are as follows: (i) to (iii).
(i) Mixer kneading: Natural rubber was put into a closed pressure kneader heated to 150°C and masticated at 30 rpm for 1 minute. Then, the one-half amount of the mixture of silica, zinc oxide, stearic acid, and an anti-aging agent which was weighed out and the total amount of the silane coupling agent composition prepared above were added. Kneading was carried out for 1 minute and 30 seconds by increasing the rotational speed to 50 rpm. Further, the remaining half amount of the mixture of silica, zinc oxide, stearic acid, and kneading was continued for 1 minute and 30 seconds. The ram (floating weight) was then raised, the surrounding powder of the mixture of silica, zinc oxide, stearic acid, and an anti-aging agent was added to the kneaded material using a brush. Kneading was further continued for 1 minute. The ram was then raised again, the surrounding powder of the mixture of silica, zinc oxide, stearic acid, and an anti-aging agent was added to the kneaded material using a brush, and the kneaded material was further kneaded for 3 minutes and discharged.
(ii) Remilling: In order to improve the dispersion of silica, the kneaded material was discharged to a closed pressure kneader heated to 120°C, and the kneaded material, the temperature of which had dropped sufficiently, was further kneaded at 50 rpm for 2 minutes and then discharged.
(iii) Roll kneading (addition of vulcanization system): After the kneaded material was discharged and the temperature was sufficiently lowered, sulfur, a vulcanization accelerator, and the like were added to the kneaded material and kneaded with two rolls, thereby obtaining a rubber composition.

Thereafter, the obtained unvulcanized rubber composition was placed in a mold (150 mm × 150 mm × 2 mm) and heated and pressed at 160°C for 30 minutes, thereby obtaining a vulcanized rubber sheet having a thickness of 2 mm.
▪ Natural rubber (RSS #3 made in Thailand): 100 parts by mass
▪ Silica AQ (trade name: Nipsil AQ manufactured by Tosoh Corporation): 40 parts by mass
▪ Zinc oxide No. 3 (trade name: Ginrei R manufactured by Toho Zinc Co., Ltd.): 3 parts by mass
▪ Stearic acid (trade name: Stearic acid 300 manufactured by New Japan Chemical Co., Ltd.): 1 part by mass
▪ Anti-aging agent (trade name: NOCLAK 6C manufactured by OUCHI SHINKO CHEMICAL INDUSTRIAL CO., LTD.): 1 part by mass
▪ Silane compound (trade name: Si363 manufactured by Degussa AG): 3.2 parts by mass
▪ Protein denaturant 1(trade name: Urea manufactured by Wako Pure Chemical Industries, Ltd.): 1 part by mass
▪ Sulfur (5% oil-treated sulfur manufactured by Hosoi Chemical Industry Co., Ltd): 2.0 parts by mass
▪ Vulcanization accelerator (trade name: NOCSELA CZ manufactured by OUCHI SHINKO CHEMICAL INDUSTRIAL CO., LTD.): 1 part by mass
▪ Vulcanization accelerator (trade name: NOCSELA D manufactured by OUCHI SHINKO CHEMICAL INDUSTRIAL CO., LTD.): 0.5 parts by mass

### [Example 2]

A silane coupling agent composition, a rubber composition, and a rubber sheet were obtained in the same manner as in Example 1, except that the protein denaturant 1 (urea) was not added, and 1 part by mass of a protein denaturant 2 (sodium dodecyl sulfate) was added.

### [Example 3]

A silane coupling agent composition, a rubber composition, and a rubber sheet were obtained in the same manner as in Example 1, except that the protein denaturant 1 (urea) was not added, and 1 part by mass of a protein denaturant 3 (guanidine hydrochloride) was added.

### [Example 4]

A silane coupling agent composition, a rubber composition, and a rubber sheet were obtained in the same manner as in Example 1, except that the amount of the silane compound (Si363) added was changed to 1.6 parts by mass, and 1.6 parts by mass of a different silane compound (Si69 manufactured by Degussa AG) was added.

### [Comparative Example 1]

A silane coupling agent composition, a rubber composition, and a rubber sheet were obtained in the same manner as in Example 1, except that the silane compound (Si363) was not added and 3.2 parts by mass of the different silane compound (Si69) was added.

### [Comparative Example 2]

A silane coupling agent composition, a rubber composition, and a rubber sheet were obtained in the same manner as in Example 2, except that the silane compound (Si363) was not added and 3.2 parts by mass of the different silane compound (Si69) was added.

### [Comparative Example 3]

A silane coupling agent composition, a rubber composition, and a rubber sheet were obtained in the same manner as in Example 3, except that the silane compound (Si363) was not added and 3.2 parts by mass of the different silane compound (Si69) was added.

### [Comparative Example 4]

A silane coupling agent composition, a rubber composition, and a rubber sheet were obtained in the same manner as in Example 4, except that the protein denaturant 1 (urea) was not added.

### [Comparative Example 5]

A silane coupling agent composition, a rubber composition, and a rubber sheet were obtained in the same manner as in Example 1, except that the protein denaturant 1 (urea) was not added.

### [Comparative Example 6]

A silane coupling agent composition, a rubber composition, and a rubber sheet were obtained in the same manner as in Comparative Example 1, except that the protein denaturant 1 (urea) was not added.

### [Evaluation of Physical Properties]

The physical properties of the rubber compositions and rubber sheets obtained in Examples 1 to 4 and Comparative Examples 1 to 6 were evaluated by the following methods.

### (Unvulcanized Compound Viscosity)

The Mooney viscosities of the rubber compositions obtained in Examples 1 to 4 and Comparative Examples 1 to 6 were determined according to JIS K6300 using a Mooney viscometer with an L-type rotor (diameter: 38.1 mm; thickness: 5.5 mm) under conditions of a preheating time of 1 minute, a rotor rotation time of 4 minutes, 100°C, and 2 rpm. The smaller the measurement result, the smaller the viscosity of the rubber composition, indicating excellent workability.

### (Hardness)

Three rubber sheets (thickness: 2 mm) obtained in Examples 1 to 4 and Comparative Examples 1 to 6 were stacked, and JIS-A strength was measured in accordance with JIS K6353 (published in 2012). The larger the measurement result, the higher the hardness of the rubber sheet and the better the steering stability of the tire.

### (Viscoelasticity)

For the rubber sheets obtained in Examples 1 to 4 and Comparative Examples 1 to 6, tan δ was obtained at measurement temperatures of 0°C and 60°C using a viscoelasticity measuring system (REOGEL E-4000 manufactured by UBM) according to JIS K 6394 under conditions of a distortion of about 0.1% and a frequency of 10 Hz, and a tan δ balance (= tan δ (0°C)/tan δ (60°C)) was calculated from each resulting value. The greater the tan δ balance, the better the viscoelastic properties of the rubber sheet, indicating an excellent balance of wet grip performance and low-fuel consumption as a tire.

### (Tensile Strength)

No. 3 dumbbell-shaped test pieces were punched out from the rubber sheets obtained in Examples 1 to 4 and Comparative Examples 1 to 6. A tensile test was conducted at a tensile speed of 500 mm/min in accordance with JIS K6251 (published in 2010) to measure 100% tensile modulus[MPa] at room temperature (25°C). The larger the measurement result, the higher the tensile strength of the rubber sheet and the better the tire performance.

Table 1 shows the above measurement results and calculation results (tan δ balance). Each measured value and each calculated value are represented by indices of the values in Comparative Example 6, each being 100.

**[Table 1]**

| | | Example 1 | Example 2 | Example 3 | Example 4 | Comparativ e Example 1 | Comparative Example 2 | Comparative Example 3 | Comparative Example 4 | Comparative Example 5 | Comparative Example 6 |
|---|---|---|---|---|---|---|---|---|---|---|---|
| | Natural rubber (RSS #3) | 100 | 100 | 100 | 100 | 100 | 100 | 100 | 100 | 100 | 100 |
| | Silica AQ | 40 | 40 | 40 | 40 | 40 | 40 | 40 | 40 | 40 | 40 |
| | Zinc oxide No. 3 | 3 | 3 | 3 | 3 | 3 | 3 | 3 | 3 | 3 | 3 |
| | Stearic acid | 1 | 1 | 1 | 1 | 1 | 1 | 1 | 1 | 1 | 1 |
| | Anti-aging agent (NOCLAK 6C) | 1 | 1 | 1 | 1 | 1 | 1 | 1 | 1 | 1 | 1 |
| | Silane compound (Si363) | 3.2 | 3.2 | 3.2 | 1.6 | 0 | 0 | 0 | 1.6 | 3.2 | 0 |
| Rubber composition formulation (parts by mass) | Different silane compound (Si69) | 0 | 0 | 0 | 1.6 | 3.2 | 3.2 | 3.2 | 1.6 | 0 | 3.2 |
| | Protein denaturant 1 (Urea) | 1 | 0 | 0 | 1 | 1 | 0 | 0 | 0 | 0 | 0 |
| | Protein denaturant 2 (Sodium dodecyl sulfate) | 0 | 1 | 0 | 0 | 0 | 1 | 0 | 0 | 0 | 0 |
| | Protein denaturant 3 (Guanidine hydrochloride) | 0 | 0 | 1 | 0 | 0 | 0 | 1 | 0 | 0 | 0 |
| | Sulfur (5% oil-treated) | 2.0 | 2.0 | 2.0 | 2.0 | 2.0 | 2.0 | 2.0 | 2.0 | 2.0 | 2.0 |
| | Vulcanization accelerator (NOCSELA CZ) | 1 | 1 | 1 | 1 | 1 | 1 | 1 | 1 | 1 | 1 |
| | Vulcanization accelerator (NOCSELA D) | 0.5 | 0.5 | 0.5 | 0.5 | 0.5 | 0.5 | 0.5 | 0.5 | 0.5 | 0.5 |
| Unvulcanized compound viscosity | ML1+4 (100°C) (index) | 94 | 95 | 94 | 94 | 92 | 96 | 96 | 106 | 110 | 100 |
| Hardness | JIS-A hardness (index) | 103 | 103 | 103 | 102 | 105 | 98 | 102 | 107 | 112 | 100 |
| Viscoelasticity | tan δ (0°C) (index) | 102 | 101 | 98 | 100 | 97 | 100 | 98 | 99 | 100 | 100 |
| | tan δ (60°C) (index) | 78 | 86 | 82 | 81 | 82 | 108 | 97 | 94 | 97 | 100 |
| | tan δ (0°C)/tan δ (60°C) (index) | 131 | 117 | 120 | 123 | 118 | 93 | 101 | 105 | 103 | 100 |
| Tensile strength | 100% tensile modulus (index) | 113 | 108 | 106 | 110 | 106 | 91 | 102 | 97 | 97 | 100 |

The results of Examples 1 to 4 and Comparative Examples 1 to 6 show that by using a silane coupling agent composition comprising the silane compound (Si363) and the protein denaturant and/or the silanization reaction accelerator, the rubber composition had decreased viscosity of the unvulcanized compound and improved hardness, viscoelastic properties, and tensile strength of the rubber sheet. Therefore, it was found that by using the silane coupling agent composition and rubber composition of the present invention, it is possible to produce a tire having improved workability of rubber and further having excellent steering stability and an excellent balance of wet grip performance and low-fuel consumption in terms of practical use.

## Claims

1. A silane coupling agent composition comprising a silane compound, a protein denaturant, and/or a silanization reaction accelerator, wherein the silane compound is represented by the following Formula (1): 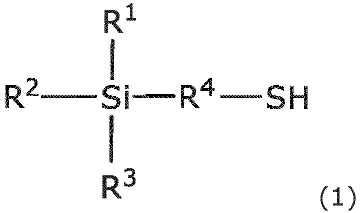 wherein
at least one or all of R¹, R², and R³ are -O-(R⁵-O)ₘ-R⁶ (R⁵ is a divalent hydrocarbon group having 1 to 30 carbon atoms, R⁶ is an alkyl group having 1 to 30 carbon atoms, an alkenyl group having 2 to 30 carbon atoms, an aryl group having 6 to 30 carbon atoms, or an aralkyl group having 7 to 30 carbon atoms, m is an integer of 1 to 30, and when there are a plurality of R⁵s, the plurality of R⁵s may be the same or different),
when one or two of R¹, R², and R³ are -O-(R⁵-O)ₘ-R⁶ above, the remaining groups can be an alkyl group having 1 to 12 carbon atoms, -O-R⁷ (R⁷ is a hydrogen atom, an alkyl group having 1 to 30 carbon atoms, an alkenyl group having 2 to 30 carbon atoms, an aryl group having 6 to 30 carbon atoms, or an aralkyl group having 7 to 30 carbon atoms), a hydrogen atom, or an aryl group having 6 to 30 carbon atoms;
R¹, R², and R³ may be the same or different; and
R⁴ is a divalent hydrocarbon group having 1 to 30 carbon atoms.

2. The silane coupling agent composition according to claim 1, wherein the protein denaturant is at least one selected from the group consisting of a carbamide compound, a guanidine compound, and a surfactant.

3. The silane coupling agent composition according to claim 1, wherein the silanization reaction accelerator is at least one selected from the group consisting of a carbamide compound and a guanidine compound.

4. The silane coupling agent composition according to claim 2 or 3, wherein the carbamide compound is urea.

5. The silane coupling agent composition according to claim 2 or 3, wherein the guanidine compound is at least one selected from the group consisting of guanidine hydrochloride and diphenylguanidine.

6. The silane coupling agent composition according to claim 2, wherein the surfactant is sodium dodecyl sulfate.

7. The silane coupling agent composition according to any one of claims 1 to 6, which further comprises a different silane compound other than the compound represented by Formula (1) above.

8. The silane coupling agent composition according to claim 7, wherein the different silane compound is a silane compound represented by the following Formula (2): 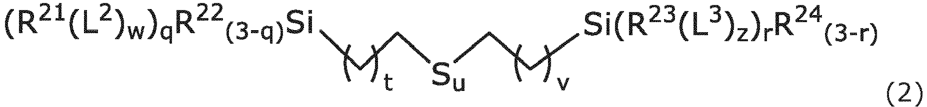 wherein
t and v are each independently an integer of 0 to 10;
u is an integer of 2 to 10;
q and r are each independently an integer of 1 to 3;
w and z are each independently an integer of 0 or 1,
L² and L³ are each independently a hydrocarbon group optionally containing at least one heteroatom selected from the group consisting of nitrogen, oxygen, and sulfur;
R²¹ and R²³ are each independently an alkoxy group or an amino group substituted with one or more alkyl groups; and
R²² and R²⁴ are each independently hydrogen or an alkyl group.

9. The silane coupling agent composition according to any one of claims 1 to 8, which is used for at least one elastomer having a glass transition point of 25°C or less selected from the group consisting of natural rubber, deproteinized natural rubber, and synthetic isoprene rubber.

10. A rubber composition comprising the silane coupling agent composition according to any one of claims 1 to 9, at least one elastomer having a glass transition point of 25°C or less selected from the group consisting of natural rubber, deproteinized natural rubber, and synthetic isoprene rubber, and an inorganic material.

11. The rubber composition according to claim 10, wherein a content of the silane compound represented by Formula (1) in the rubber composition is from 0.1 to 30 parts by mass with respect to 100 parts by mass of the elastomer.

12. The rubber composition according to claim 10 or 11, wherein a content of the inorganic material is from 5 to 100 parts by mass with respect to 100 parts by mass of the elastomer.

13. The rubber composition according to any one of claims 10 to 12, which is used for a tire.

14. A crosslinked product of the rubber composition according to any one of claims 10 to 13.

15. A tire comprising the crosslinked product according to claim 14.
